# EUROPEAN PATENT APPLICATION

(11) **EP 4 836 426 A1**
(43) Date of publication of application: **04.11.2026**
(21) Application number: 24910840.8
(22) Date of filing: 17.12.2024
(51) Int. Cl.: H04N 21/431, H04N 21/4402, H04N 21/2187, H04N 21/2343

(54) **METHOD AND APPARATUS FOR LIVESTREAMING INTERACTION, DEVICE, AND STORAGE MEDIUM**

(30) Priority: 29.12.2023 CN 202311864883
(71) Applicant: Beijing Zitiao Network Technology Co., Ltd., Beijing 100190 (CN)
(72) Inventor: FANG, Angxiang, Beijing 100028 (CN); ZHU, Ziang, Beijing 100028 (CN); CHEN, Meng, Beijing 100028 (CN)
(74) Representative: Marks & Clerk LLP
(86) International application number: PCT/CN2024/139990
(87) International publication number: WO 2025/139909

(57) **Abstract**

Embodiments of the disclosure relate to a method, an apparatus, a device, and a storage medium for live streaming interaction. The method includes: obtaining first live streaming content at a streamer's of a live streaming room, the first live streaming content having a portrait style; and presenting, in a live streaming interface of the live streaming room, second live streaming content in a target landscape style in response to determining that an image configuration of the live streaming room indicates the target landscape style, the second live streaming content being generated based on the first live streaming content. In this way, it is possible to support a streamer party of the live streaming room to flexibly configure an image style of the live streaming content, which helps to improve a user's interaction experience in the live streaming room.

## Description

The present application claims priority to Chinese Patent Application No. 202311864883.6, filed on December 29, 2023, and entitled "METHOD, APPARATUS, DEVICE AND STORAGE MEDIUM FOR LIVE STREAMING INTERACTION", which is hereby incorporated by reference in its entirety.

### FIELD

Example embodiments of the present disclosure generally relate to the field of computers, and in particular, to a method, an apparatus, a device for live streaming interaction, and a computer-readable storage medium.

### BACKGROUND

With the development of computer technologies, Internet has become an important source for people to obtain various contents. The live streaming technology, which uses the Internet and streaming media technologies to transmit contents, is developing rapidly. People may interact in various ways in a live streaming room and obtain rich information through the live streaming room. A streamer party of the live streaming room may pre-configure parameters of the live streaming room.

### SUMMARY

In a first aspect of the present disclosure, a method for live streaming interaction is provided. The method includes: obtaining first live streaming content at a streamer side of a live streaming room, the first live streaming content having a portrait style; and presenting, in a live streaming interface of the live streaming room, second live streaming content in a target landscape style in response to determining that an image configuration of the live streaming room indicates the target landscape style, the second live streaming content being generated based on the first live streaming content.

In a second aspect of the present disclosure, an apparatus for live streaming interaction is provided. The apparatus includes: a content obtaining module configured to obtain first live streaming content at a streamer side of a live streaming room, the first live streaming content having a portrait style; and a content presenting module configured to present, in a live streaming interface of the live streaming room, second live streaming content in a target landscape style in response to determining that an image configuration of the live streaming room indicates the target landscape style, the second live streaming content being generated based on the first live streaming content.

In a third aspect of the present disclosure, an electronic device is provided. The electronic device includes at least one processing unit; and at least one memory, the at least one memory being coupled to the at least one processing unit and storing instructions executable by the at least one processing unit, the instructions, when executed by the at least one processing unit, causing the electronic device to perform the method of the first aspect.

In a fourth aspect of the present disclosure, a computer-readable storage medium is provided. The computer-readable storage medium has a computer program stored thereon, the computer program being executable by a processor to implement the method of the first aspect.

In a fifth aspect of the present disclosure, a computer program product is provided, including computer program instructions that, when executed by a processor, implement the image processing method as described above.

It should be understood that the content described in this Summary section is not intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference numerals refer to the same or similar elements, where:
FIG. 1 shows a schematic diagram of an example environment in which the embodiments according to the present disclosure may be implemented;
FIG. 2A to FIG. 2E show example interfaces according to some embodiments of the present disclosure;
FIG. 3A to FIG. 3C show example interfaces according to other embodiments of the present disclosure;
IG. 4 shows a flowchart of a live streaming interaction process according to some embodiments of the present disclosure;
FIG. 5 shows a block diagram of an apparatus for live streaming interaction according to some embodiments of the present disclosure; and
FIG. 6 shows a block diagram of an electronic device in which one or more embodiments of the present disclosure may be implemented.

### DETAILED DESCRIPTION OF EMBODIMENTS

The embodiments of the present disclosure will be described in more detail below with reference to the drawings. Although some embodiments of the present disclosure are shown in the drawings, it should be understood that the present disclosure may be implemented in various forms and should not be construed as limited to the embodiments set forth herein. Instead, these embodiments are provided for a more thorough and complete understanding of the present disclosure. It should be understood that the drawings and embodiments of the present disclosure are only for illustrative purposes, and are not intended to limit the protection scope of the present disclosure.

In the description of the embodiments of the present disclosure, the term "include/comprise" and similar terms should be understood as open-ended inclusions, that is, "include/comprise but not limited to". The term "based on" should be understood as "at least partially based on". The term "one embodiment" or "the embodiment" should be understood as "at least one embodiment". The term "some embodiments" should be understood as "at least some embodiments". The terms "first", "second", etc. may refer to different or same objects. Other definitions, both explicit and implicit, may also be included below.

Herein, unless explicitly stated, "performing a step in response to A" does not mean that the step is performed immediately after "A", but may include one or more intermediate steps.

It may be understood that the data involved in the technical solution (including but not limited to the data itself, acquisition or use of the data) should comply with the requirements of corresponding laws, regulations and related provisions.

It may be understood that before using the technical solution disclosed in the embodiments of the present disclosure, the user should be informed of the type, range of use, use scenarios, etc. of personal information involved in the present disclosure and obtain the authorization of the user through appropriate means according to relevant laws and regulations.

For example, in response to receiving an active request from a user, prompt information is sent to the user to clearly prompt the user that the requested operation will require access to and use of the user's personal information, so that the user may independently choose whether to provide the personal information to software or hardware, such as an electronic device, an application, a server, or a storage medium, that performs the operations of the technical solution of the present disclosure based on the prompt information.

As an optional but non-restrictive implementation, in response to receiving the active request from the user, the prompt information may be sent to the user in the form of, for example, a pop-up window, in which the prompt information may be presented in text. In addition, the pop-up window may also include a selection control for the user to select "agree" or "disagree" to provide the personal information to the electronic device.

It may be understood that the above process of notifying and obtaining user authorization is only illustrative and does not limit the implementations of the present disclosure. Other methods that satisfy relevant laws and regulations may also be applied to the implementations of the present disclosure.

Traditionally, only a live streaming room interface in a portrait style may be provided. A streamer party of the live streaming room cannot set a style (for example, a portrait style or a landscape style) of the live streaming room interface.

In view of this, embodiments of the present disclosure provide an improved solution for live streaming interaction. According to the solution, first live streaming content at a streamer side of a live streaming room is obtained, where the first live streaming content has a portrait style. Second live streaming content is presented in a live streaming interface of the live streaming room in a target landscape style in response to determining that an image configuration of the live streaming room indicates the target landscape style, where the second live streaming content is generated based on the first live streaming content.

In this way, in the embodiments of the present disclosure, it is possible to support the streamer party of the live streaming room to flexibly configure an image style of the live streaming content, and it is possible to support generation of live streaming content in a landscape style. This helps to improve a user's interaction experience in the live streaming room.

Various example implementations of the solution are described in further detail below in conjunction with the drawings.

### Example Environment

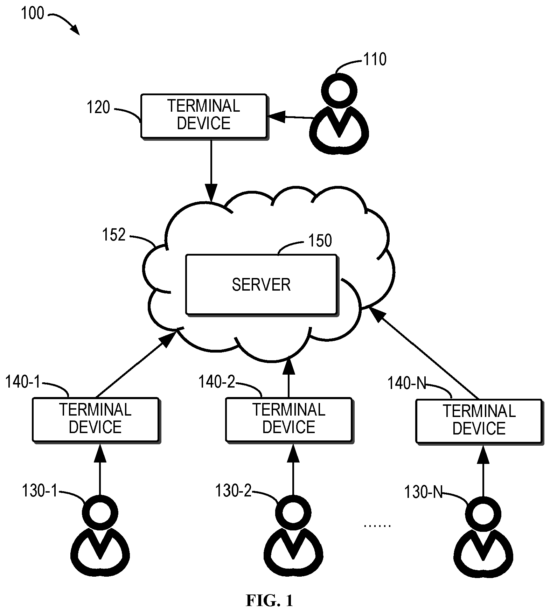

FIG. 1 shows a schematic diagram of an example environment 100 in which the embodiments of the present disclosure may be implemented. In the environment 100, a user 110 may establish a live streaming room and provide live streaming content through an associated terminal device 120. In some scenarios, the user 110 is also referred to as a streamer, a streaming party, or an administrator party of the live streaming room. The terminal device 120 may also be referred to as a streamer side of the live streaming room.

One or more users 130-1, 130-2, ..., 130-N may watch the live streaming and participate in the interaction in the live streaming room through respectively associated terminal devices 140-1, 140-2, ..., 140-N. For the convenience of discussion, the users 130-1, 130-2, ..., 130-N may be collectively or individually referred to as a user 130, and the terminal devices 140-1, 140-2, ..., 140-N may be collectively or individually referred to as a terminal device 140. In some scenarios, the user 130 may also be referred to as an audience, a listener, a viewing party, or a participating party of the live streaming room. The terminal device 140 may also be referred to as an audience side of the live streaming room.

It should be understood that although only a single streamer user is shown in FIG. 1, in some embodiments, multiple streamer users may initiate live streaming in a certain live streaming room.

In some embodiments, the terminal device 120 and the terminal device 140 may be respectively installed with an application that may provide a live streaming service, or may access a website that may provide a live streaming service. The user 110 and the user 130 may operate the terminal device 120 and the terminal device 140 to access the corresponding application or website.

Correspondingly, the terminal device 120 and the terminal device 140 may present corresponding live streaming interfaces, which may, for example, provide live streaming content, such as audio live streaming content or video live streaming content, of the live streaming room.

In some embodiments, the terminal device 120 and the terminal device 140 may also communicate with a server 150 through network 152 to implement the provision of live streaming services. The server 150 may provide functions such as management, configuration, and maintenance of the application or website.

The terminal device 120 and the terminal device 140 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a television receiver, a radio broadcast receiver, an e-book device, a game device, or any combination of the foregoing, including accessories and peripherals of these devices or any combination thereof. In some embodiments, the terminal devices 120 and 140 may also support any type of user-specific interface (such as a "wearable" circuit, etc.).

The server 150 may be various types of computing systems/servers that may provide computing power, including but not limited to mainframes, edge computing nodes, computing devices in cloud environments, and so on. The server 130 may, for example, provide backend services for the applications that provide live streaming services in the terminal device 120 and the terminal device 140.

It should be understood that the structure and function of each element in the environment 100 are described for illustrative purposes only, without suggesting any limitation to the scope of the present disclosure.

Some example embodiments of the present disclosure are described below with continued reference to the drawings.

### Example Interaction

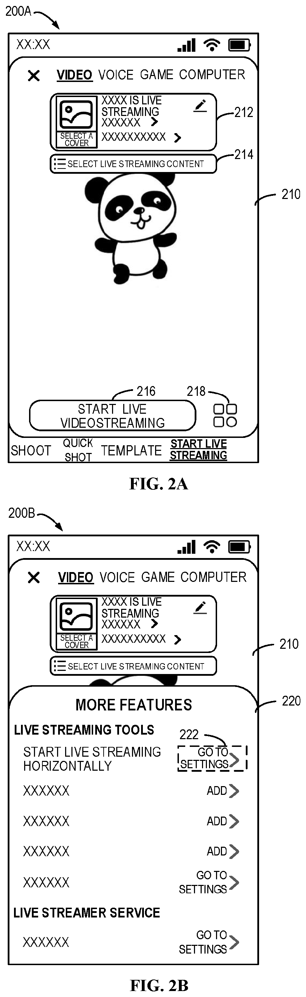

Example interfaces 200A to 300C of some embodiments of the present disclosure are described below in conjunction with FIG. 2A to FIG. 3C. The example interfaces 200A to 300C may correspond to a streamer of a live streaming room and/or an audience of the live streaming room, for example. It should be understood that the example interfaces 200A to 300C shown in FIG. 2A to FIG. 3C are only example interfaces, and various interface designs may actually exist. Each graphic element in the interface may have different arrangements and different visual representations, one or more of the elements may be omitted or replaced, and there may also be one or more other elements. The embodiments of the present disclosure are not limited in this regard.

In the embodiments of the present disclosure, first live streaming content having a portrait style (which may also be referred to as a longitudinal style) at the streamer side (that is, the terminal device 120) of the live streaming room may be obtained, and second live streaming content may be presented in the live streaming interface of the live streaming room in a target landscape style in response to determining that an image configuration of the live streaming room indicates the target landscape style. The second live streaming content here is generated based on the first live streaming content. Such a live streaming interaction method may be implemented at the terminal device 120, that is, the terminal device 120 directly crops the obtained first live streaming content having a portrait style to obtain the second live streaming content, and presents the second live streaming content in the live streaming interface in the target landscape style.

Such a live streaming interaction method may also be implemented at the server 150 and/or the terminal device 140. The server 150 and/or the terminal device 140 may obtain the first live streaming content having the portrait style at the terminal device 120, and generate the second live streaming content based on the obtained first live streaming content. The server 150 and/or the terminal device 140 may obtain the first live streaming content and the image configuration for the live streaming room via a communication connection with the terminal device 120, for example. The server 150 and/or the terminal device 140 may present the second live streaming content in the live streaming interface of the live streaming room in the target landscape style in response to determining that the image configuration indicates the target landscape style.

In the following, for the convenience of description, the case where such a live streaming interaction method is implemented at the terminal device 120 is taken as an example for description. In this paper, the portrait style is a style with a height greater than a width, and the landscape style is a style with a width greater than a height.

In some embodiments, the first live streaming content may be acquired by the terminal device 120 in a vertical orientation state. The first live streaming content acquired by the terminal device 120 may be presented in the live streaming interface of the live streaming room in a portrait style by default, for example. Regarding the specific method of acquiring the first live streaming content, in some embodiments, the terminal device 120 may acquire the first live streaming content at least including video content and audio content via a camera, a microphone, etc.

In some embodiments, the terminal device 120 may determine the image configuration for the live streaming room based on configuration information of the live streaming room set by the streamer of the live streaming room. The image configuration may, for example, indicate an image style (that is, a portrait style or a landscape style) of the live streaming room. This configuration information may be pre-configured by the streamer before the live streaming. In this case, the terminal device 120 may determine the image configuration of the live streaming room based on the pre-obtained configuration information in response to obtaining the first live streaming content. The terminal device 120 may generate the second live streaming content having the target landscape style based on the first live streaming content in response to the image configuration indicating that the image style is the target landscape style.

This configuration information may also be configured by the streamer during the live streaming. In this case, the terminal device 120 may present the first live streaming content in the live streaming interface in a default portrait style in response to obtaining the first live streaming content. The terminal device 120 may determine the image style of the live streaming room based on the image configuration in response to receiving the configuration information including the image configuration. The terminal device 120 may generate the second live streaming content having the target landscape style based on the first live streaming content in response to the image configuration indicating that the image style is the target landscape style.

Regarding the specific method of determining the configuration information of the live streaming room, in some embodiments, the terminal device 120 may provide a configuration interface for the live streaming room. This configuration interface may include one or more configuration interfaces, for example, may include an image configuration interface for the live streaming room. In some embodiments, before the live streaming of the live streaming room starts, the terminal device 110 may provide the image configuration interface in response to an image configuration request. The terminal device 110 may determine the image configuration for the live streaming room via the image configuration interface.

Regarding the specific method of generating the second live streaming content, in some embodiments, the terminal device 120 may crop the first live streaming content to generate the second live streaming content having the target landscape style. The terminal device 120 may, for example, crop an image that matches an aspect ratio of the target landscape style from a central area of an image of the first live streaming content as the second live streaming content. For example, the terminal device 120 may crop the height of the image of the first live streaming content by simultaneously cutting top and bottom parts of the image to reserve the central area of the image based on the aspect ratio of the target landscape style while keeping the width of the image of the first live streaming content unchanged. The cropped first live streaming content is the second live streaming content. It may be understood that the terminal device 120 may crop the first live streaming content based on any appropriate image cutting technology to generate the second live streaming content, which is not limited in the present disclosure.

Alternatively or additionally, in some embodiments, the terminal device 120 may also expand the first live streaming content to generate the second live streaming content having the target landscape style. The terminal device 120 for example may, based on the aspect ratio indicated by the target landscape style, expand the first live streaming content with the first live streaming content as an image center. For example, the terminal device 120 may expand the height of the image of the first live streaming content by simultaneously expanding the top and bottom parts of the image based on the aspect ratio of the target landscape style while keeping the width of the image of the first live streaming content unchanged, so that the image of the first live streaming content is always the image center. The expanded first live streaming content is the second live streaming content. Similarly, it may be understood that the terminal device 120 may expand the first live streaming content based on any appropriate image expansion technology to generate the second live streaming content, which is not limited in the present disclosure.

Accordingly, the terminal device 120 may generate the second live streaming content having the aspect ratio indicated by the target landscape style based on the target landscape style and the first live streaming content. The terminal device 120 may then switch the first live streaming content having the portrait style in the live streaming interface to the second live streaming content having the target landscape style (that is, present the second live streaming content in the live streaming interface in the target landscape style).

By way of example, as shown in FIG. 2A, before the live streaming of the live streaming room starts, the terminal device 110 may provide the configuration interface shown in the example interface 200A. The first live streaming content 210 currently obtained by the terminal device 120 may be presented in the example interface 200A. It should be noted that because the live streaming of the live streaming room has not started yet, only the terminal device 120 of the streamer (for example, the user 110) of the live streaming room may present the example interface 200A including the first live streaming content 210.

The example interface 200A includes a panel 212 and a control 214. The user 110 may configure information such as a cover of the live streaming room and a name of the live streaming room via the panel 212. That is, the terminal device 120 may determine the configuration information such as the cover of the live streaming room, the name of the live streaming room, etc. via the panel 212. The user 110 may also select the live streaming content of the live streaming room via the control 214. For example, the terminal device 120 may present a plurality of options regarding the live streaming content in response to receiving a trigger operation for the control 214. The terminal device 120 may determine at least one option and/or a user input as the live streaming content of the live streaming room in response to receiving a selection operation for at least one option from the plurality of options by the user 110, and/or in response to receiving the user input from the user 110. For example, the plurality of options may include a pet, a food, a scenery, a clothing, an accessory, etc., and the terminal device 120 may determine that the live streaming content of the live streaming room is "clothing" and "accessory" in response to receiving the selection operation for the two options "clothing" and "accessory" by the user 110.

The example interface 200A may also include a control 218. The terminal device 120 may present the example interface 200B shown in FIG. 2B in response to receiving a trigger operation for the control 218. The example interface 200B may include an interface 220. The interface 220 includes a plurality of configurable items for the live streaming room. The plurality of configurable items at least includes a configurable item corresponding to the image configuration (that is, "start live in landscape mode" in FIG. 2B). The interface 220 may also include a configuration control corresponding to each item. By way of example, the interface 220 may include a configuration control 222 corresponding to the configurable item of the image configuration. The terminal device 120 may determine that the image configuration request is received in response to receiving a selection operation for the configuration control 222.

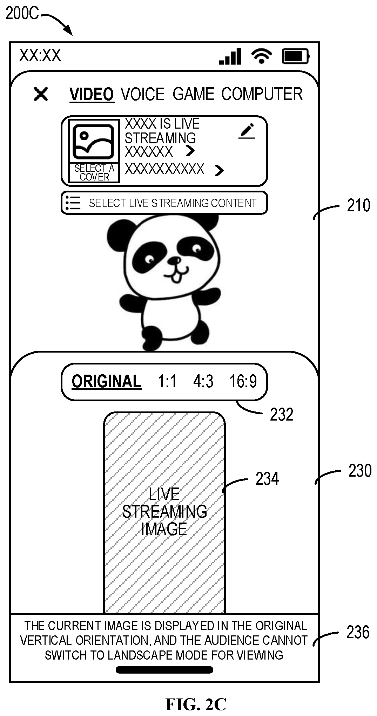

In some embodiments, the terminal device 120 may provide the example interface 200C shown in FIG. 2C in response to receiving the image configuration request. The example interface 200C shows an example of an image configuration interface. The example interface 200C may present a plurality of candidate styles for the live streaming image. By way of example, the example interface 200C may include a control 232, and the terminal device 120 may present a plurality of candidate styles in the control 232. It may be understood that the control 232 may be located at any appropriate position of the example interface 200C, which is not limited in the present disclosure. In some embodiments, the plurality of candidate styles includes a portrait style (for example, a style "original") and at least one landscape style. In some embodiments, if the at least one landscape style includes a plurality of landscape styles, each of the plurality of landscape styles has a different aspect ratio. For example, in the case that 3 landscape styles (for example, a style "1:1", a style "4:3", and a style "16:9" shown in FIG. 2C) are included, the aspect ratios of the 3 landscape styles may be 1:1, 4:3, and 16:9, respectively. The aspect ratio here refers to the ratio of a lateral length to a longitudinal length of the live streaming image. Certainly, any other aspect ratio suitable for the landscape style may be configured and provided for the user to select.

The plurality of candidate styles here may be a plurality of candidate styles predetermined by a staff member providing the live streaming service, or a staff member of the application/website providing the live streaming service. In this case, the user 110 cannot adjust the plurality of candidate styles, and may only select one target style from the plurality of candidate styles. The plurality of candidate styles here may also include at least one candidate style customized by the user 110. The at least one candidate style customized by the user 110 may be a candidate style customized by the user 110 in history, or may be a candidate style input by the user 110 in real time. In this case, the user 110 may select one target style from at least one candidate style provided by the application/website providing the live streaming service and at least one candidate style customized by the user 110.

The terminal device 120 may also present, for example, the image style of the live streaming room and an interface preview corresponding to the image style in the example interface 200C. The interface preview may include, for example, a first preview part indicating an aspect ratio of the image style, and/or a second preview part including reference live streaming content that matches the aspect ratio of the image style. By way of example, the example interface 200C may include an area 230. The terminal device 120 may present the first preview part in the area 230, and present the second preview part in an area other than the area 230 of the example interface 200C. The first preview part shows the aspect ratio of the corresponding image style to the user in the form of a schematic diagram. The second preview part may adjust a live streaming image/a live streaming background image (before the live streaming starts) in real time to show the user the live streaming viewing effect after the corresponding image style is selected.

In some embodiments, as shown in FIG. 2C, because the first live streaming content is in the portrait style, the terminal device 120 may present the first preview part corresponding to the portrait style by default in the area 230 of the example interface 200C, and present the second preview part corresponding to the portrait style in the area other than the area 230 of the example interface 200C. In this case, the control 232 may indicate that the currently selected image style is the portrait style (that is, the style "original" in the figure). The first preview part in the area 230 includes an element 234 and prompt information 236. The element 234 may indicate the aspect ratio of the portrait style. The prompt information 236 may indicate, for example, that the current image style is the portrait style and does not support landscape mode for viewing. The reference live streaming content in the second preview part may include at least part of the first live streaming content 210 in the portrait style, for example.

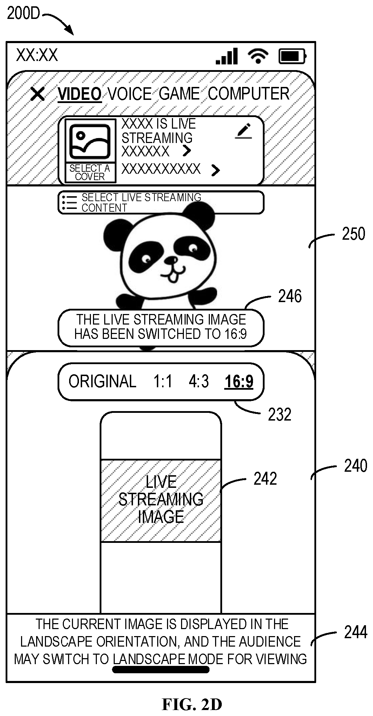

In some embodiments, the terminal device 120 may also present a first interface preview corresponding to a first candidate style in the image configuration interface in response to receiving a selection operation for the first candidate style in the control 232. It may be understood that the first interface preview includes a first preview part indicating an aspect ratio of the first candidate style, and/or a second preview part including reference live streaming content that matches the aspect ratio of the first candidate style. By way of example, as shown in FIG. 2C and FIG. 2D, the terminal device 120 may present the example interface 200D shown in FIG. 2D in response to receiving the selection operation for the style "16:9" in the control 232 in the example interface 200C. The example interface 200D shows another example of the image configuration interface.

As shown in FIG. 2D, the example interface 200D may include an area 240. The terminal device 120 may present the first preview part corresponding to the style "16:9" in the area 240 of the example interface 200D, and present the second preview part corresponding to the style "16:9" in an area other than the area 240 of the example interface 200D. In this case, the control 232 may indicate that the currently selected image style is the style "16:9". The first preview part in the area 240 includes an element 242 and prompt information 244. The element 244 may indicate the aspect ratio of the style "16:9". Since the style "16:9" is a landscape style, the prompt information 244 may indicate that the current image style is a landscape style and supports landscape mode for viewing. The reference live streaming content in the second preview part may include at least part of the second live streaming content 250 corresponding to the style "16:9". The second live streaming content 250 corresponding to the style "16:9" here may be, for example, an image that matches the aspect ratio of the style "16:9" and is cropped from the central area of the image of the first live streaming content 210 by the terminal device 120 based on the style "16:9".

In addition to the above interface preview, other interface previews corresponding to the first candidate style may also be presented, for example, a live streaming interface preview on the viewing side of the live streaming room. By way of example, in addition to presenting the interface preview via the image configuration interface, the terminal device 120 may also switch to presenting a reference interface on the audience side of the live streaming room in response to an interface viewing operation by the user 110. This reference interface may present an example of a live streaming interface that may be viewed on the audience side of the live streaming room, for example.

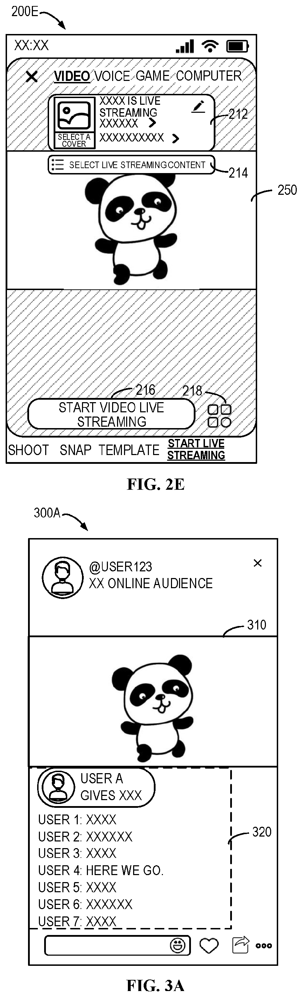

In some embodiments, in response to receiving a determination operation for a candidate style from the plurality of candidate styles in the image configuration interface, the terminal device 120 may generate live streaming content that matches an aspect ratio of the candidate style. By way of example, if the candidate style is a landscape style from the at least one landscape style, the terminal device 120 may determine the landscape style as the target landscape style, and may generate and present the second live streaming content that matches the aspect ratio of the target landscape style after the live streaming starts. For example, the terminal device 120 may determine the style "16:9" as the target landscape style in response to receiving a determination operation for the style "16:9" in the control 232, and generate the second live streaming content 250 that matches the aspect ratio (that is, 16:9) of the target landscape style. The terminal device 120 may present the example interface 200E shown in FIG. 2E, for example. The terminal device 120 may present the second live streaming content 250 in the example interface 200E. The example interface 200E may include a live streaming control 216. The terminal device 120 may start the live streaming of the live streaming room in response to receiving a trigger operation for the live streaming control 216.

In some embodiments, after the second live streaming content is generated, in order to present the second live streaming content in the live streaming interface of the live streaming room (which may include the live streaming interface on the streamer side and the live streaming interface on the audience side, for example), the terminal device 120 may transmit the second live streaming content 250 to a server side (for example, the server 150) to cause the server side to send the second live streaming content 250to the viewing side of the live streaming room. The viewing side here may be a terminal device (for example, the terminal device 140) corresponding to the audience (for example, the user 130) of the live streaming room, for example. Accordingly, the second live streaming content having the target landscape style may be presented in both the viewing side of the live streaming room and the live streaming interface of the streamer side.

Example interfaces 300A to 300C shown in FIG. 3A to FIG. 3C show a plurality of examples of the live streaming interface. As shown in FIG. 3A, the example interface 300A may include a live streaming content display area 310 (which may be abbreviated as area 310) and a comment display area 320 (which may be abbreviated as area 32). The second live streaming content having the target landscape style may be presented in the area 310, for example. Comment content for the live streaming room may be presented in the area 320.

In some embodiments, the height of the area 320 is not less than a lower limit of height. This lower limit of height t may be preset by the streamer (that is, the user 110) or a staff member of the application/website providing the live streaming service. Alternatively or additionally, this lower limit of height may also be set by the terminal device 120/the server 150. In some embodiments, all the live streaming interfaces (that is, the live streaming interface on the streamer side and the live streaming interface on the audience side) may have the same lower limit of height. It may be understood that the height of the area 320 not less than the lower limit of height does not mean that the areas 320 of all the live streaming interfaces have the same height. For example, if the lower limit of height is 5, the height of the area 320 of the live streaming interface presented by the terminal device 140-1 of the user 130-1 may be 7, and the height of the area 320 of the live streaming interface presented by the terminal device 140-2 of the user 130-2 may be 9. That is, the height of the area 320 of different live streaming interfaces may be any appropriate height higher than the lower limit of height.

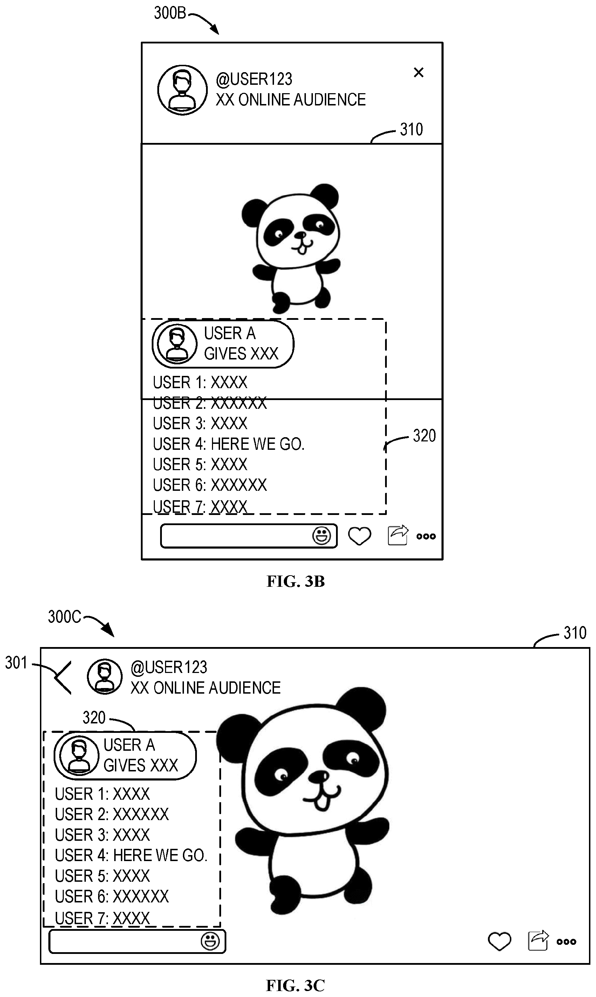

In some embodiments, the target landscape style of the second live streaming content does not affect the lower limit of height of the area 320. As shown in FIG. 3A and FIG. 3B, the example interface 300A and the example interface 300B shown in FIG. 3A and FIG. 3B may be, for example, live streaming interfaces that present the second live streaming content corresponding to different target landscape styles. Since the second live streaming content in the example interface 300A and the example interface 300B corresponds to different target landscape styles, the aspect ratio of the area 310 of the example interface 300A is different from the aspect ratio of the area 310 of the example interface 300B (that is, the image size of the area 310 of the example interface 300A is different from the image size of the area 310 of the example interface 300B). However, the area 320 of the example interface 300A may be the same as the area 320 of the example interface 300B. The height of the area 320 of the example interface 300A and the height of the area 320 of the example interface 300B may be the same height that is not less than the lower limit of height, for example.

In some embodiments, in the case that the second live streaming content having the target landscape style is presented in the live streaming interface, the audience (for example, the user 130) of the live streaming room may also watch the live streaming room horizontally. In this case, the terminal device 140 may present the example interface 300C shown in FIG. 3C, for example. The example interface 300C shows an example of a live streaming interface played horizontally. The example interface 300C may also include the area 310 and the area 320. The height of the area 320 is not less than the lower limit of height, and the second live streaming content presented in the area 310 has the target landscape style. In this case, the example interface 300C may also include a control 301, for example. The terminal device 140 may present the live streaming interface in the vertical orientation shown in FIG. 3A or FIG. 3B in response to receiving a trigger operation for the control 301, for example.

In summary, according to the embodiments of the present disclosure, it is possible to support the streamer party of the live streaming room to flexibly configure the image style of the live streaming content, and it is possible to support generation of the live streaming content in the landscape style. This helps to improve the user's interaction experience in the live streaming room.

### Example Process

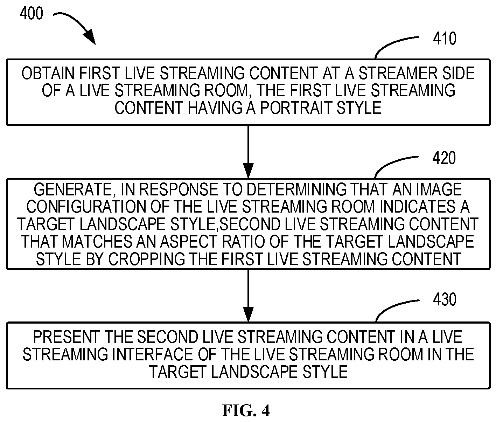

FIG. 4 shows a flowchart of a process 400 of live streaming interaction according to some embodiments of the present disclosure. The process 400 may be implemented at the terminal device 120, the terminal device 140, and/or the server 150. The case where the process 400 is implemented at the terminal device 120 is taken as an example for description below. The process 400 is described below with reference to FIG. 1.

At block 410, the terminal device 120 obtains first live streaming content at a streamer side of a live streaming room, where the first live streaming content has a portrait style.

At block 420, the terminal device 120 presents second live streaming content in a live streaming interface of the live streaming room in a target landscape style in response to determining that an image configuration of the live streaming room indicates the target landscape style, where the second live streaming content is generated based on the first live streaming content.

In some embodiments, the second live streaming content is generated by cropping the first live streaming content.

In some embodiments, the second live streaming content is generated based on the following process: cropping an image that matches an aspect ratio of the target landscape style from a central area of an image of the first live streaming content, to serve as the second live streaming content.

In some embodiments, the second live streaming content has an aspect ratio indicated by the target landscape style.

In some embodiments, the first live streaming content is acquired by a terminal device at the streamer side in a vertical orientation state.

In some embodiments, the process 400 is implemented at the streamer side, and the process 400 further includes: transmitting the second live streaming content to a server side, to cause the server side to send the second live streaming content to a viewing side of the live streaming room.

In some embodiments, the process 400 further includes: providing, before live streaming of the live streaming room starts, an image configuration interface in response to an image configuration request, the image configuration interface presenting a plurality of candidate styles for a live streaming image, the plurality of candidate styles including a portrait style and at least one landscape style; and determining that the image configuration of the live streaming room indicates a target landscape style in response to detecting selection confirmation for the target landscape style from the at least one landscape style.

In some embodiments, the process 400 further includes: presenting, in response to detecting a selection of a first candidate style from the plurality of candidate styles, a first interface preview corresponding to the first candidate style.

In some embodiments, the first interface preview includes at least one of the following: a first preview part including an indication of an aspect ratio of the first candidate style; and a second preview part including reference live streaming content that matches the aspect ratio of the first candidate style.

In some embodiments, the target landscape style is selected from a plurality of landscape styles, each landscape style having a different aspect ratio.

In some embodiments, the live streaming interface of the live streaming room includes a live streaming content display area and a comment display area, and in the live streaming interface corresponding to each landscape style from the plurality of landscape styles, the height of the comment display area is not less than a lower limit of height.

### Example Apparatus and Device

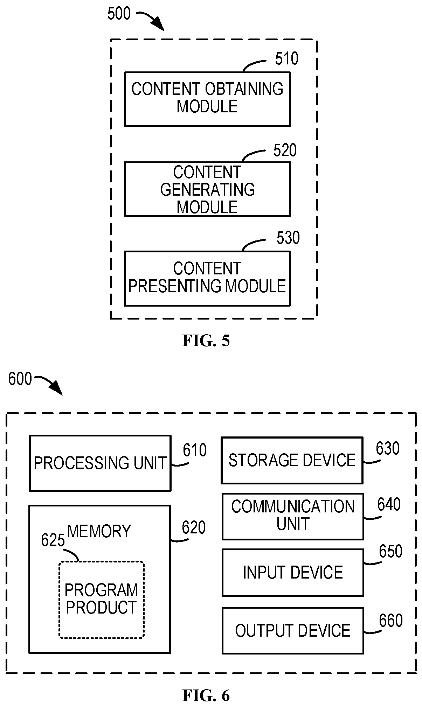

The embodiments of the present disclosure further provide a corresponding apparatus for implementing the above method or process. FIG. 5 shows a block diagram of an apparatus 500 for live streaming interaction according to some embodiments of the present disclosure. The apparatus 500 may be implemented as or included in the terminal device 120, the terminal device 140, and/or the server 150. The case where the apparatus 500 is implemented as or included in the terminal device 120 is taken as an example for description below. Each module/component in the apparatus 500 may be implemented by hardware, software, firmware, or any combination thereof.

As shown in FIG. 5, the apparatus 500 includes a content obtaining module 510 configured to obtain first live streaming content at a streamer side of a live streaming room, the first live streaming content having a portrait style. The apparatus 500 also includes a content presenting module 520 configured to present second live streaming content in a live streaming interface of the live streaming room in a target landscape style in response to determining that an image configuration of the live streaming room indicates the target landscape style, the second live streaming content being generated based on the first live streaming content.

In some embodiments, the second live streaming content is generated by cutting the first live streaming content.

In some embodiments, the apparatus 500 also includes a content generation module configured to generate the second live streaming content based on the following process: cropping an image that matches an aspect ratio of the target landscape style from a central area of an image of the first live streaming content, to serve as the second live streaming content.

In some embodiments, the second live streaming content has an aspect ratio indicated by the target landscape style.

In some embodiments, the first live streaming content is acquired by a terminal device at the streamer side in a vertical orientation state.

In some embodiments, the apparatus 500 is implemented at the streamer side, and the apparatus 500 also includes a content transmission module configured to transmit the second live streaming content to a server side, to cause the server side to send the second live streaming content to a viewing side of the live streaming room.

In some embodiments, the apparatus 500 also includes an interface provision module and a style determination module. The interface provision module is configured to provide, before live streaming of the live streaming room starts, an image configuration interface in response to an image configuration request, the image configuration interface presenting a plurality of candidate styles for a live streaming image, the plurality of candidate styles including a portrait style and at least one landscape style. The style determination module is configured to determine that the image configuration of the live streaming room indicates a target landscape style in response to detecting selection confirmation for the target landscape style from the at least one landscape style.

In some embodiments, the apparatus 500 also includes a preview presenting module configured to present, in response to detecting a selection of a first candidate style from the plurality of candidate styles, a first interface preview corresponding to the first candidate style.

In some embodiments, the first interface preview includes at least one of the following: a first preview part including an indication of an aspect ratio of the first candidate style; and a second preview part including reference live streaming content that matches the aspect ratio of the first candidate style.

In some embodiments, the target landscape style is selected from a plurality of landscape styles, each landscape style having a different aspect ratio.

In some embodiments, the live streaming interface of the live streaming room includes a live streaming content display area and a comment display area, and in the live streaming interface corresponding to each less than a lower limit of height.

The units and/or modules included in the apparatus 500 may be implemented in various ways, including software, hardware, firmware, or any combination thereof. In some embodiments, one or more units and/or modules may be implemented using software and/or firmware, for example machine executable instructions stored on a storage medium. In addition to machine executable instructions or as an alternative, some or all units and/or modules in the apparatus 500 may be implemented at least partially by one or more hardware logic components. As an example, rather than a limitation, example types of hardware logic components that may be used include field programmable gate array (FPGA), application specific integrated circuit (ASIC), application specific standard (ASSP), system on chip (SOC), complex programmable logic device (CPLD), and so on.

FIG. 6 shows a block diagram of an electronic device 600 in which one or more embodiments of the present disclosure may be implemented. It should be understood that the electronic device 600 shown in FIG. 6 is only illustrative, and should not constitute any limitation on the function and scope of the embodiments described herein. The electronic device 600 shown in FIG. 6 may be used to implement the terminal device 120, the terminal device 140, and/or the server 150 in FIG. 1.

As shown in FIG. 6, the electronic device 600 is in the form of a general computing device. The components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and may execute various processes based on the programs stored in the memory 620. In a multi-processor system, multiple processing units execute computer executable instructions in parallel to improve the parallel processing capability of the electronic device 600.

The electronic device 600 usually includes multiple computer storage media. Such media may be any available media that is accessible to the electronic device 600, including but not limited to volatile and non-volatile media, removable and non-removable media. The memory 620 may be a volatile memory (for example, a register, a cache, a random access memory (RAM)), a non-volatile memory (for example, a read-only memory (ROM), an electrically erasable programmable read-only memory (EEPROM), a flash memory), or any combination thereof. The storage device 630 may be a removable or non-removable medium, and may include a machine-readable medium such as a flash drive, a disk, or any other medium, which may be used to store information and/or data and may be accessed within the electronic device 600.

The electronic device 600 may further include other removable/non-removable, volatile/non-volatile storage media. Although not shown in FIG. 6, a disk drive for reading from or writing to a removable, non-volatile disk (such as a "floppy disk"), and an optical disk drive for reading from or writing to a removable, non-volatile optical disk may be provided. In these cases, each drive may be connected to a bus (not shown) by one or more data medium interfaces. The memory 620 may include a computer program product 625 having one or more program modules configured to perform various methods or actions of the various embodiments of the present disclosure.

The communication unit 640 implements communication with other electronic devices through the communication medium. Additionally, the functions of the components of the electronic device 600 may be implemented with a single computing cluster or multiple computing machines that may communicate via communication connections. Therefore, the electronic device 600 may use a logical connection with one or more other servers, network personal computers (PCs) or another network node to operate in a networked environment.

The input device 650 may be one or more input devices, such as a mouse, a keyboard, a tracking ball, etc. The output device 660 may be one or more output devices, such as a display, a speaker, a printer, etc. The electronic device 600 may also communicate with one or more external devices (not shown) such as a storage device, a display device, etc., with one or more devices that enable the user to interact with the electronic device 600, or with any devices (e.g., a network card, a modem, etc.) that enable the electronic device 600 to communicate with one or more other electronic devices as needed via the communication unit 640. Such communication may be performed via input/output (I/O) interfaces (not shown).

According to an example implementation of the present disclosure, there is provided a computer-readable storage medium having computer-executable instructions stored thereon, the computer-executable instructions being executed by a processor to implement the method described above. According to an example implementation of the present disclosure, there is further provided a computer program product tangibly stored on a non-transitory computer-readable medium and including computer-executable instructions, the computer-executable instructions being executed by a processor to implement the method described above.

Various aspects of the present disclosure are described herein with reference to flowcharts and/or block diagrams of methods, apparatuses, devices, and computer program products implemented according to the present disclosure. It should be understood that each block of the flowchart and/or block diagram, and combinations of blocks in the flowchart and/or block diagram, may be implemented by computer-readable program instructions.

These computer-readable program instructions may be provided to a processing unit of a general-purpose computer, a special-purpose computer, or other programmable data processing apparatus to produce a machine, such that these instructions, when executed by the processing unit of the computer or other programmable data processing apparatus, produce an apparatus for implementing the functions/actions specified in one or more blocks of the flowchart and/or block diagram. These computer-readable program instructions may also be stored in a computer-readable storage medium, these instructions cause the computer, the programmable data processing apparatus, and/or other devices to work in a specific manner, so that the computer-readable medium storing the instructions includes a manufactured product, which includes instructions for implementing various aspects of the functions/actions specified in one or more blocks of the flowchart and/or block diagram.

The computer-readable program instructions may be loaded onto a computer, another programmable data processing apparatus, or other devices, such that a series of operations and steps are performed on the computer, the other programmable data processing apparatus, or the other devices to generate a computer-implemented process, so that the instructions executed on the computer, the other programmable data processing apparatus, or the other devices implement the functions/actions specified in one or more blocks of the flowchart and/or block diagram.

The flowcharts and block diagrams in the drawings show the possibly implemented architectures, functions, and operations of the system, the method, and the computer program product according to multiple implementations of the present disclosure. In this regard, each block in the flowchart or block diagram may represent a module, program segment, or part of an instruction, which contains one or more executable instructions for implementing the specified logical functions. In some alternative implementations, the functions indicated in the blocks may also occur in an order different from that indicated in the drawings. For example, two consecutive blocks may actually be performed substantially in parallel, or they may sometimes be performed in the reverse order, depending on the functions involved. It should also be noted that each block in the block diagram and/or the flowchart, and the combination of the blocks in the block diagram and/or the flowchart may be implemented by a special-purpose hardware-based system that performs the specified functions or actions, or by a combination of special-purpose hardware and computer instructions.

The implementations of the present disclosure have been described above, and the above description is illustrative, non-exhaustive, and not limited to the disclosed implementations. Many modifications and changes will be apparent to those of ordinary skill in the art without departing from the scope and spirit of the described implementations. The terms used herein are chosen to best explain the principles of the implementations, the practical applications, or improvements to the technologies in the market, or to enable other ordinary skilled persons in the art to understand the implementations disclosed herein.

## Claims

1. A method for live streaming interaction, comprising:
obtaining first live streaming content at a streamer side of a live streaming room, the first live streaming content having a portrait style; and
presenting, in a live streaming interface of the live streaming room, second live streaming content in a target landscape style in response to determining that an image configuration of the live streaming room indicates the target landscape style, the second live streaming content being generated based on the first live streaming content.

2. The method of claim 1, wherein the second live streaming content is generated by cropping the first live streaming content.

3. The method of claim 2, wherein the second live streaming content is generated based on the following process:
cropping an image that matches an aspect ratio of the target landscape style from a central area of an image of the first live streaming content, to serve as the second live streaming content.

4. The method of any of claims 1 to 3, wherein the second live streaming content has an aspect ratio indicated by the target landscape style.

5. The method of any of claims 1 to 4, wherein the first live streaming content is acquired by a terminal device of the streamer side in a vertical orientation state.

6. The method of any of claims 1 to 5, wherein the method is implemented at the streamer side, and the method further comprises:
transmitting the second live streaming content to a server side, to cause the server side to send the second live streaming content to a viewing side of the live streaming room.

7. The method of any of claims 1 to 6, further comprising:
providing, before live streaming of the live streaming room starts, an image configuration interface in response to an image configuration request, the image configuration interface presenting a plurality of candidate styles for a live streaming image, the plurality of candidate styles comprising the portrait style and at least one landscape style; and
determining that the image configuration of the live streaming room indicates the target landscape style in response to detecting selection confirmation for the target landscape style from the at least one landscape style.

8. The method of claim 7, further comprising:
presenting, in response to detecting a selection of a first candidate style from the plurality of candidate styles, a first interface preview corresponding to the first candidate style.

9. The method of claim 8, wherein the first interface preview comprises at least one of:
a first preview part comprising an indication of an aspect ratio of the first candidate style; and
a second preview part comprising reference live streaming content that matches the aspect ratio of the first candidate style.

10. The method of any of claims 1 to 9, wherein the target landscape style is selected from a plurality of landscape styles each having a different aspect ratio.

11. The method of claim 10, wherein the live streaming interface of the live streaming room comprises a live streaming content display area and a comment display area, and in the live streaming interface corresponding to each landscape style from the plurality of landscape styles, a height of the comment display area is not less than a lower limit of height.

12. An apparatus for live streaming interaction, comprising:
a content obtaining module configured to obtain first live streaming content at a streamer side of a live streaming room, the first live streaming content having a portrait style; and
a content presenting module configured to present, in a live streaming interface of the live streaming room, second live streaming content in a target landscape style in response to determining that an image configuration of the live streaming room indicates the target landscape style, the second live streaming content being generated based on the first live streaming content.

13. An electronic device, comprising:
at least one processing unit; and
at least one memory, the at least one memory being coupled to the at least one processing unit and storing instructions executable by the at least one processing unit, the instructions, when executed by the at least one processing unit, causing the electronic device to perform the method of any of claims 1 to 11.

14. A computer-readable storage medium having a computer program stored thereon, the computer program being executable by a processor to implement the method of any of claims 1 to 11.

15. A computer program product, comprising computer-executable instructions, wherein the computer-executable instructions, when executed by a processor, implement the method of any of claims 1 to 11.
